# EUROPEAN PATENT APPLICATION

(11) **EP 4 726 900 A1**
(43) Date of publication of application: **15.04.2026**
(21) Application number: 24941527.4
(22) Date of filing: 04.12.2024
(51) Int. Cl.: H01M 50/446, H01M 50/417, H01M 50/406, H01M 50/491, H01M 50/494, H01M 50/489, H01M 10/0525, H01M 10/052

(54) **PREPARATION METHOD FOR LITHIUM BATTERY SEPARATOR HAVING LOW SHUTDOWN TEMPERATURE AND HIGH STRENGTH**

(30) Priority: 31.05.2024 CN 202410699932
(71) Applicant: Hebei Gellec New Energy Science & Technology Co., Ltd, Handan, Hebei 057150 (CN)
(72) Inventor: YUAN, Haichao, Handan, Hebei 057150 (CN); XU, Feng, Handan, Hebei 057150 (CN); GUO, Zhanxing, Handan, Hebei 057150 (CN); MA, Wenxian, Handan, Hebei 057150 (CN); MA, Cong, Handan, Hebei 057150 (CN); YANG, Huan, Handan, Hebei 057150 (CN); HOU, Dandan, Handan, Hebei 057150 (CN); FENG, Xiaocong, Handan, Hebei 057150 (CN); ZHAO, Zhuangzhuang, Handan, Hebei 057150 (CN); WANG, Ruixin, Handan, Hebei 057150 (CN); REN, Shengwang, Handan, Hebei 057150 (CN)
(74) Representative: Viering, Jentschura & Partner mbB Patent- und Rechtsanwälte
(86) International application number: PCT/CN2024/136694
(87) International publication number: WO 2025/246259

(57) **Abstract**

The present disclosure relates to the technical field of lithium battery separators, and proposes a preparation method of a lithium battery separator with low shutdown temperature and high strength. The preparation method comprises the following steps: mixing the raw materials, extruding, tape-casting into a sheet, performing longitudinal stretching, performing primary transverse stretching, extracting, performing secondary transverse stretching, and forming a film. The raw materials of the lithium battery separator comprise the following components in parts by weight: 15 to 27 parts of ultrahigh-molecular weight polyethylene, 1 to 6 parts of pyrolyzed polyethylene wax, 0.4 to 1.5 parts of a toughening agent, and 70 to 80 parts of solvent oil. The above technical solution solves the problems of high shutdown temperature and low strength of lithium battery separators in the prior art.

## Description

### TECHNICAL FIELD

The present disclosure relates to the technical field of lithium battery separators, in particular to a preparation method of a lithium battery separator with low shutdown temperature and high strength.

### BACKGROUND

With the vigorous development of the new energy vehicle industry, lithium battery industry in China has risen to the core position in the global supply chain. However, with the continuous emergence of new vehicle models, consumers are paying more and more attention to the safety performance of automobiles, especially in the critical aspect of lithium battery separators, whose strength has become an important criterion for measuring safety.

Lithium battery separators need to have both the characteristics of high strength and low shutdown temperature, so that they can respond quickly at relatively low temperatures to prevent thermal runaway while ensuring the stability of the lithium battery structure. However, the practical challenge is that the shutdown temperature of traditional high-strength lithium battery separators, such as ultrahigh-molecular weight polyethylene, is as high as above 135°C, which runs counter to the goal of pursuing a lower shutdown temperature.

At present, the industry is trying to add low-melting-point substances into high-strength lithium battery separators. Although this helps to reduce the shutdown temperature to a certain extent, it also greatly reduces the strength of the lithium battery separator. Therefore, it is of great significance to develop a preparation method of a lithium battery separator with low shutdown temperature and high strength.

### SUMMARY

The present disclosure provides a preparation method of a lithium battery separator with low shutdown temperature and high strength, which solves the problems of high shutdown temperature and low strength of the lithium battery separators in related art.

The technical solution of the present disclosure is as follows:

The present disclosure provides a lithium battery separator with low shutdown temperature and high strength, wherein the raw materials include the following components in parts by weight: 15 to 27 parts of ultrahigh-molecular weight polyethylene, 1 to 6 parts of pyrolyzed polyethylene wax, 0.4 to 1.5 parts of a toughening agent, and 70 to 80 parts of solvent oil.

As a further technical solution, the mass ratio of the ultrahigh-molecular weight polyethylene to pyrolyzed polyethylene wax is 4-5:1.

In the present disclosure, when the mass ratio of the ultrahigh-molecular weight polyethylene to pyrolyzed polyethylene wax is 4-5:1, it helps to further improve the strength of the lithium-ion battery separator.

As a further technical solution, the weight-average molecular weight of the ultrahigh-molecular weight polyethylene is 1.5 million to 5 million.

In the present disclosure, the ultrahigh-molecular weight polyethylene can improve the strength of the lithium-ion battery separator, and the weight-average molecular weight of the ultrahigh-molecular weight polyethylene is preferably 1.5 million to 5 million, and more preferably 3 million to 5 million.

As a further technical solution, the softening point of the pyrolyzed polyethylene wax is 105-115 °C.

In the present disclosure, the pyrolyzed polyethylene wax can effectively reduce the shutdown temperature of the lithium-ion battery separator, and the softening point of the pyrolyzed polyethylene wax is preferably 105-115 °C, and more preferably 105-110 °C.

As a further technical solution, the toughening agent is one or more selected from 35BA40 toughening agent, AX8900 toughening agent, and 28MA07 toughening agent.

In the present disclosure, the addition of the toughening agent effectively improves the strength of the lithium-ion battery separator, and the toughening agent can be selected from Arkema's 35BA40 toughening agent, AX8900 toughening agent, and 28MA07 toughening agent, etc., preferably 35BA40 toughening agent.

As a further technical solution, the solvent oil includes one of white oil, castor oil, rapeseed oil, peanut oil, paraffin oil, and mineral oil.

As a further technical solution, the raw materials also include 0.1-0.3 part of dihydroxyaluminum aminoacetate and 0.1-1 part of nano-calcium carbonate.

In the present disclosure, by adding dihydroxyaluminum aminoacetate and nano-calcium carbonate, an organic-inorganic synergistic effect enhances the crystallization of the ultrahigh-molecular weight polyethylene, thereby further improving the strength of the lithium-ion battery separator.

As a further technical solution, the weight ratio of dihydroxyaluminum aminoacetate to nano-calcium carbonate is 1:2-3.

In the present disclosure, when the weight ratio of dihydroxyaluminum aminoacetate to nano-calcium carbonate is 1:2-3, it helps to further improve the strength of the lithium-ion battery separator.

As a further technical solution, the nano-calcium carbonate is microencapsulated nano-calcium carbonate.

In the microencapsulated nano-calcium carbonate, the core material is nano-calcium carbonate, and the shell material is polyaniline.

In the present disclosure, the use of microencapsulated nano-calcium carbonate can effectively prevent a large amount of agglomeration caused by the large specific surface area of the nano-calcium carbonate, improves the uniformity of the lithium-ion battery separator, and thus further improves the strength of the lithium-ion battery separator.

As a further technical solution, the preparation method of the microencapsulated nano-calcium carbonate includes the following steps:
S1, dissolving polyaniline in N-methylpyrrolidone, adding nano-calcium carbonate, and dispersing uniformly to obtain a mixed solution; and
S2, spray-drying the mixed solution to obtain the microencapsulated nano-calcium carbonate.

As a further technical solution, the weight ratio of the nano-calcium carbonate to polyaniline is 10:1-3.

In the present disclosure, when the weight ratio of nano-calcium carbonate to polyaniline is 10:1-3, it helps to further improve the strength of the lithium-ion battery separator.

As a further technical solution, the particle size of the nano-calcium carbonate is 50-100 nm.

The present disclosure also proposes a preparation method of the lithium battery separator with low shutdown temperature and high strength, including the following steps: mixing the raw materials, extruding, tape-casting into a sheet, performing longitudinal stretching, performing primary transverse stretching, extracting, performing secondary transverse stretching, and forming a film.

As a further technical solution, the temperature during the mixing is 40-70 °C.

As a further technical solution, the temperature during the extruding is 180-220 °C.

As a further technical solution, the temperature during the longitudinal stretching is 100-120 °C, and the stretching ratio of the longitudinal stretching ratio is 6-10 times.

As a further technical solution, the temperature during the primary transverse stretching is 100-120 °C, and the stretching ratio of the primary transverse stretching ratio is 6-12 times.

As a further technical solution, the temperature during the extracting is 15-25 °C.

As a further technical solution, the temperature during the secondary transverse stretching is 125-135 °C, and the stretching ratio of the secondary transverse stretching is 1.2-1.5 times.

The working principle and beneficial effects of the present disclosure are as follows:

In the present disclosure, the combined use of low-melting-point, low-molecular-weight pyrolyzed polyethylene wax and the ultrahigh-molecular weight polyethylene allows the pyrolyzed polyethylene wax to be uniformly distributed inside the lithium battery separator. When the lithium battery separator is heated to a certain temperature, the pyrolyzed polyethylene wax melts, involving the entire separator shutdown, thereby reducing the shutdown temperature of the separator, so that the shutdown temperature of the separator can be as low as below 130 °C. On the one hand, the addition of toughening agent can effectively prevent the poor crystallization effect of the ultrahigh-molecular weight polyethylene due to the low melting point and low molecular weight of the pyrolyzed polyethylene wax, and on the other hand, it can accelerate and tighten the crosslinking of molecular chains during the crystallization process of the ultrahigh-molecular weight polyethylene, thereby significantly improving the strength of lithium-ion battery separators.

### DETAILED DESCRIPTION OF THE EMBODIMENTS

The followings will be combined with the embodiments of the present disclosure to clearly and completely describe the technical solutions in the embodiments of the present disclosure. Obviously, the described embodiments are only part of the embodiments of the present disclosure, not all of the embodiments. Based on the embodiments of the present disclosure, all other embodiments obtained by ordinary technicians in this field without creative work are within the scope of protection of the present disclosure.

In the following embodiments and comparative examples, unless otherwise specified, the particle size of nano-calcium carbonate is 50 nm; the product number of polyaniline is DH11918, which is purchased from Hubei Dahao Chemical Industry Co., Ltd.; the toughening agent is 35BA40 toughening agent; and the paraffin oil is 50# paraffin oil.

### Example 1

This example relates to a lithium battery separator with low shutdown temperature and high strength, wherein the raw materials include the following components by weight: 15 parts of the ultrahigh-molecular weight polyethylene (weight-average molecular weight: 5 million), 1 part of the pyrolyzed polyethylene wax (model: DP0109F, softening point: 115 °C), 0.4 part of the toughening agent, and 70 parts of the paraffin oil;
the preparation method includes the following steps: mixing the components at 45 °C for 1 h, extruding at 190 °C, tape-casting into a sheet, performing longitudinal stretching at 110 °C (stretching ratio is 9 times), performing primary transverse stretching at 118 °C (stretching ratio is 10 times), extracting in dichloromethane at 20 °C for 10 minutes, performing secondary transverse stretching at 134 °C (stretching ratio is 1.3 times), forming a film, and obtaining a lithium-ion battery separator.

### Example 2

This example relates to a lithium battery separator with low shutdown temperature and high strength, wherein the raw materials include the following components by weight: 18 parts of the ultrahigh-molecular weight polyethylene (weight-average molecular weight 1.5 million), 3 parts of the pyrolyzed polyethylene wax (model DP0020F, softening point 110 °C), 0.6 part of the toughening agent, and 75 parts of the paraffin oil;
the preparation method includes the following steps: mixing the components at 45 °C for 1 h, extruding at 190 °C, tape-casting into a sheet, performing longitudinal stretching at 110 °C (stretching ratio is 9 times), performing primary transverse stretching at 118 °C (stretching ratio is 10 times), extracting in dichloromethane at 20 °C for 10 minutes, performing secondary transverse stretching at 134 °C (stretching ratio is 1.3 times), forming a film, and obtaining a lithium-ion battery separator.

### Example 3

This example relates to a lithium battery separator with low shutdown temperature and high strength, wherein the raw materials include the following components by weight: 27 parts of the ultrahigh-molecular weight polyethylene (weight-average molecular weight 3 million), 6 parts of the pyrolyzed polyethylene wax (model EP620F, softening point 105 °C), 1.5 parts of the toughening agent, and 80 parts of the paraffin oil;
the preparation method includes the following steps: mixing the components at 45 °C for 1 h, extruding at 190 °C, tape-casting into a sheet, performing longitudinal stretching at 110°C (stretching ratio is 9 times), performing primary transverse stretching at 118 °C (stretching ratio is 10 times), extracting in dichloromethane at 20 °C for 10 minutes, performing secondary transverse stretching at 134 °C (stretching ratio is 1.3 times), forming a film, and obtaining a lithium-ion battery separator.

### Example 4

The difference between this example and Example 2 is only that in this Example, the weight of the pyrolyzed polyethylene wax is 6 parts.

### Example 5

The difference between this example and Example 2 is only that in this Example, the weight of the pyrolyzed polyethylene wax is 4.5 parts.

### Example 6

The difference between this example and Example 2 is only that in this Example, the weight of the pyrolyzed polyethylene wax is 3.6 parts.

### Example 7

The difference between this example and Example 6 is only that in this Example, the raw materials additionally include 0.2 part of the dihydroxyaluminum aminoacetate.

### Example 8

The difference between this example and Example 6 is only that in this Example, the raw materials additionally include 0.2 part of nano-calcium carbonate.

### Example 9

The difference between this example and Example 6 was only that in this Example, the raw materials additionally included 0.1 part of dihydroxyaluminum aminoacetate and 0.1 part of nano-calcium carbonate.

### Example 10

The difference between this example and Example 9 is only that in this Example, the weight of dihydroxyaluminum aminoacetate is 0.3 part, and the weight of nano-calcium carbonate is 1 part.

### Example 11

The difference between this example and Example 9 is only that in this Example, the weight of dihydroxyaluminum aminoacetate is 0.25 part, and the weight of nano-calcium carbonate is 0.35 part.

### Example 12

The difference between this example and Example 11 is only that in this Example, the weight of dihydroxyaluminum aminoacetate is 0.1 part, and the weight of nano-calcium carbonate is 0.5 part.

### Example 13

The difference between this example and Example 11 is only that in this Example, the weight of dihydroxyaluminum aminoacetate is 0.2 part, and the weight of nano-calcium carbonate is 0.4 part.

### Example 14

The difference between this example and Example 11 is only that in this Example, the weight of dihydroxyaluminum aminoacetate is 0.15 part, and the weight of nano-calcium carbonate is 0.45 part.

### Example 15

The difference between this example and Example 14 is only that in this Example, the nano-calcium carbonate is microencapsulated nano-calcium carbonate, and the preparation method of the microencapsulated nano-calcium carbonate includes the following steps:
S1. Dissolving polyaniline in N-methylpyrrolidone, adding nano-calcium carbonate, and dispersing uniformly to obtain a mixed solution; and
S2. Spray-drying the mixed solution to obtain microencapsulated nano-calcium carbonate;
the weight ratio of nano-calcium carbonate to polyaniline is 20:1.

### Example 16

The difference between this example and Example 15 is only that in this Example, the weight ratio of nano-calcium carbonate to polyaniline in the microencapsulated nano-calcium carbonate is 10:4.

### Example 17

The difference between this example and Example 15 is only that in this Example, the weight ratio of nano-calcium carbonate to polyaniline in the microencapsulated nano-calcium carbonate is 10:1.

### Example 18

The difference between this example and Example 15 is only that in this Example, the weight ratio of nano-calcium carbonate to polyaniline in the microencapsulated nano-calcium carbonate is 10:3.

### Comparative Example 1

The difference between this comparative example and Example 2 is only that no pyrolyzed polyethylene wax is added in this comparative example.

### Comparative Example 2

The difference between this comparative example and Example 2 is only that no toughening agent is added in this comparative example.

### Comparative Example 3

The difference between this comparative example and Example 2 is only that neither pyrolyzed polyethylene wax nor toughening agent is added in this comparative example.

### Comparative Example 4

The difference between this comparative example and Example 2 is only that in this comparative example, the pyrolyzed polyethylene wax is replaced with an equal amount of the low-melting point polyethylene wax (model P-200, softening point 110 °C).

### Comparative Example 5

The difference between this comparative example and Example 2 is only that in this comparative example, the pyrolyzed polyethylene wax is replaced with an equal amount of the low-melting point polyethylene (model LA0710, melting point 107 °C).

The shutdown temperatures of the lithium-ion battery separators prepared in the Examples 1-18 and Comparative Examples 1-5 were tested using a differential scanning calorimeter (model: DZ-DSC300), wherein the heating rate is 10 °C/min, the cut-off temperature is 220 °C, and the flow rate of the nitrogen atmosphere was 50 mL/min. The test results showed that the shutdown temperatures of the lithium-ion battery separators of the Examples 1 to 18 and Comparative Examples 2, 4, and 5 were 125 to 129 °C, the shutdown temperature of the lithium-ion battery separator of Comparative Example 1 was 135 °C, and the shutdown temperature of the lithium-ion battery separator of Comparative Example 3 was 136 °C.

According to GB/T 36363-2018 "Polyolefin Separator for Lithium-ion Battery", the tensile strength and puncture resistance of the lithium-ion battery separators prepared in the Examples 1 to 18 and Comparative Examples 1 to 5 were tested, wherein the tensile strength was tested at a test speed of 250 mm/min; the puncture resistance was tested at a test speed of 100 mm/min. The test results were shown in Table 1 below.

**Table 1 Test Results**

| Groups | Tensile strength (MPa) | Puncture resistance (N/µm) |
|---|---|---|
| Example 1 | 282 | 0.65 |
| Example 2 | 274 | 0.63 |
| Example 3 | 289 | 0.66 |
| Example 4 | 278 | 0.64 |
| Example 5 | 287 | 0.65 |
| Example 6 | 292 | 0.67 |
| Example 7 | 312 | 0.71 |
| Example 8 | 316 | 0.73 |
| Example 9 | 321 | 0.74 |
| Example 10 | 333 | 0.78 |
| Example 11 | 327 | 0.75 |
| Example 12 | 331 | 0.76 |
| Example 13 | 339 | 0.79 |
| Example 14 | 344 | 0.81 |
| Example 15 | 362 | 0.86 |
| Example 16 | 366 | 0.88 |
| Example 17 | 374 | 0.93 |
| Example 18 | 379 | 0.96 |
| Comparative Example 1 | 271 | 0.61 |
| Comparative Example 2 | 243 | 0.52 |
| Comparative Example 3 | 256 | 0.55 |
| Comparative Example 4 | 265 | 0.59 |
| Comparative Example 5 | 261 | 0.58 |

The comparison between Example 2 and Comparative Example 2 demonstrates that the addition of a toughening agent to a lithium-ion battery separator can significantly eliminate the negative effects of pyrolyzed polyethylene wax and significantly improve the strength of the lithium-ion battery separator. The comparison between Example 2 and Comparative Examples 4-5 shows that, compared with ordinary low-melting point polyethylene wax and low-melting point polyethylene, the combined use of pyrolyzed polyethylene wax and the ultrahigh-molecular weight polyethylene can reduce the shutdown temperature while improving the strength of the lithium-ion battery separator.

The comparison between Examples 3-4 and Examples 5-6 indicates that when the mass ratio of the ultrahigh-molecular weight polyethylene to pyrolyzed polyethylene wax is 4-5:1, it helps to further improve the strength of the lithium-ion battery separator. The comparison between Examples 6-8 and Examples 9 reveals that the addition of dihydroxyaluminum aminoacetate and nano-calcium carbonate can further improve the strength of the lithium-ion battery separator. The comparison between Examples 11-12 and Examples 13-14 shows that when the weight ratio of dihydroxyaluminum aminoacetate to nano-calcium carbonate is 1:2-3, it helps to further improve the strength of the lithium-ion battery separator. The comparison between Examples 14 and Examples 15-18 shows that microencapsulating nano-calcium carbonate helps to further improve the strength of the lithium-ion battery separator. The comparison between Examples 15-16 and Examples 17-18 shows that when the weight ratio of nano-calcium carbonate to polyaniline is 10:1-3, it helps to further improve the strength of the lithium-ion battery separator.

The above are only preferred embodiments of the present disclosure and are not intended to limit the present disclosure. Any modifications, equivalent substitutions, improvements, etc., made within the spirit and principles of the present disclosure should be included in the protection scope of the present disclosure.

## Claims

1. A lithium battery separator with low shutdown temperature and high strength, wherein the raw materials comprise the following components in parts by weight: 15 to 27 parts of ultrahigh-molecular weight polyethylene, 1 to 6 parts of pyrolyzed polyethylene wax, 0.4 to 1.5 parts of a toughening agent, and 70 to 80 parts of solvent oil.

2. The lithium battery separator with low shutdown temperature and high strength according to claim 1, wherein the mass ratio of the ultrahigh-molecular weight polyethylene to the pyrolyzed polyethylene wax is 4-5:1.

3. The lithium battery separator with low shutdown temperature and high strength according to claim 1, wherein the weight-average molecular weight of the ultrahigh-molecular weight polyethylene is 1.5 million to 5 million.

4. The lithium battery separator with low shutdown temperature and high strength according to claim 1, wherein the softening point of the pyrolyzed polyethylene wax is 105-115 °C.

5. The lithium battery separator with low shutdown temperature and high strength according to claim 1, wherein the toughening agent is one or more selected from 35BA40 toughening agent, AX8900 toughening agent, and 28MA07 toughening agent.

6. The lithium battery separator with low shutdown temperature and high strength according to claim 1, wherein the raw materials further comprise 0.1-0.3 part of dihydroxyaluminum aminoacetate and 0.1-1 part of nano-calcium carbonate.

7. The lithium battery separator with low shutdown temperature and high strength according to claim 6, wherein the weight ratio of dihydroxyaluminum aminoacetate to nano-calcium carbonate is 1:2-3.

8. The lithium battery separator with low shutdown temperature and high strength according to claim 6, wherein the nano-calcium carbonate is microencapsulated nano-calcium carbonate;
wherein in the microencapsulated nano-calcium carbonate, the core material is nano-calcium carbonate, and the shell material is polyaniline.

9. The lithium battery separator with low shutdown temperature and high strength according to claim 8, wherein a preparation method of the microencapsulated nano-calcium carbonate comprises the following steps:
S1, dissolving polyaniline in N-methylpyrrolidone, adding nano-calcium carbonate, and dispersing uniformly to obtain a mixed solution; and
S2, spray-drying the mixed solution to obtain the microencapsulated nano-calcium carbonate.

10. A preparation method of the lithium battery separator with low shutdown temperature and high strength according to any one of claims 1-9, wherein the preparation method comprises the following steps: mixing the raw materials, extruding, tape-casting into a sheet, performing longitudinal stretching, performing primary transverse stretching, extracting, performing secondary transverse stretching, and forming a film.
